# EUROPÄISCHE PATENTANMELDUNG

(11) **EP 2 896 444 A1**
(43) Veröffentlichungstag der Anmeldung: **22.07.2015**
(21) Anmeldenummer: 15000024.8
(22) Anmeldetag: 08.01.2015
(51) Int. Cl.: B01D 29/23, B01D 29/64

(54) **Vorrichtung und Verfahren zum Filtern einer Flüssigkeit mit Abreinigungsvorrichtung ohne Prozessunterbrechung**

(30) Priorität: 15.01.2014 DE 102014100415
(71) Anmelder: Krone Filter Solutions GmbH, 28876 Oyten (DE)
(72) Erfinder: Matosovic, Alexander, 27726 Worpswede (DE); Thölken, Nadine, 27726 Worpswede (DE)
(74) Vertreter: Ellberg, Nils

(57) **Zusammenfassung**

Um Flüssigkeiten bzw. Wasser von Schwebstoffen zu trennen, werden üblicherweise mechanische Filter zum Filtern eingesetzt. Dazu weisen die bekannten Filtervorrichtungen siebartige Filterelemente auf. Die Schwebstoffe können die Filterelemente nicht passieren und sammeln sich innerhalb des Filterelements. Das führt dazu, dass eine regelmäßige Wartung bzw. eine regelmäßige Reinigung der Filterelemente oder sogar Auswechslung notwendig wird, was mit einer zeit- und kostenintensiven Unterbrechung der Filtration verbunden ist.

Die Erfindung sieht es vor eine Vorrichtung (10) und ein Verfahren zum Filtern einer Flüssigkeit zu schaffen, wonach dem Filterelement (32) eine Einrichtung zum Abreinigen des Filterelements (32) zugewiesen wird und das Abreinigen in zwei Schritten erfolgt.

## Beschreibung

Die Erfindung betrifft eine Vorrichtung zum Filtern einer Flüssigkeit gemäß dem Obergriff des Anspruchs 1. Außerdem betrifft die Erfindung ein Verfahren zum Filtern einer Flüssigkeit gemäß dem Oberbegriff des Anspruchs 8.

In Flüssigkeiten, wie beispielsweise Wasser, sind vielfach Verunreinigungen oder Schwebestoffe enthalten, die unterschiedlicher Herkunft und somit unterschiedlicher Art sein können. So kann es sich bei Schwebeteilchen um Blätter, Geäst, kleine Steine, aber auch Kleinstlebewesen, wie beispielsweise Muscheln, Algen oder dergleichen handeln. Dies ist insbesondere dann der Fall, wenn das Wasser einem natürlichen Reservoir, wie zum Beispiel einem See, einem Fluss oder dem Meer entnommen wird.

Insbesondere bei der Verwendung einer Flüssigkeit wie Wasser als Kühlflüssigkeit für Anlagen, wie etwa Motoren an Bord von Schiffen, Kraftwerken, Fabriken und für vergleichbare Einsatzzwecke, führt die Ansammlung, von Schwebestoffen und insbesondere für den Fall von Kleinstlebewesen deren Vermehrung dazu, dass die Anlagen verschlammen, und sich außerdem ein Oberflächenbesatz mit Kleinstlebewesen innerhalb der Anlagen bildet. Um die Anlagen von diesen Auswirkungen zu befreien, sind regelmäßige und kostenintensive Reinigungsvorgänge notwendig. Das gleiche gilt jedoch auch für Anlagen, die Abwässer insbesondere von Industrieanlagen filtern. Insbesondere bei der Verwendung von Flüssigkeiten, wie zum Beispiel Wasser als Prozessflüssigkeit, kann die Anlage bei dem spezifischen Prozess mit Stoffen verunreinigt werden, die so nicht mehr an die Umgebung abgegeben werden dürfen. Sowohl bei den oben beschriebenen Zu- und Abwässern tritt meist ein erheblicher Durchsatz von Flüssigkeiten auf, so dass sich der Grad der Verschmutzung proportional zum Flüssigkeitsdurchsatz verhält.

Um Flüssigkeiten bzw. Wasser von Schwebestoffen und Kleinstlebewesen zu trennen, werden üblicherweise mechanische Filter vor den Einlass in die jeweilig zu schützende Vorrichtung bzw. Umwelt eingesetzt. Dazu weisen die bekannten Filtervorrichtungen siebartige Filterelemente auf, deren Maschengröße bzw. Perforierung kleiner als die Abmessungen der herauszufilternden Schwebestoffe ist. Die Schwebestoffe können somit die Filterelemente nicht passieren und sammeln sich innerhalb des Filterelements. Dadurch verringert sich der Durchsatz der Filter kontinuierlich bis zum vollständigen Verstopfen. Das führt dazu, dass eine regelmäßige Wartung bzw. eine regelmäßige Reinigung der Filterelemente oder sogar Auswechslung notwendig wird, welche mit einer zeit- und kostenintensiven Unterbrechung der Filtration verbunden ist.

Der Erfindung liegt nun die Aufgabe zugrunde, eine Vorrichtung zum Filtern einer Flüssigkeit, sowie ein entsprechendes Verfahren zum Filtern einer Flüssigkeit zu schaffen.

Eine Vorrichtung zur Lösung dieser Aufgabe ist gekennzeichnet durch die Merkmale des Anspruchs 1. Dabei ist dem Filterelement eine Einrichtung zum Abreinigen des Filterelements zugewiesen. Die Vorrichtung weist mindestens zwei Kammern auf. Eine erste Kammer weist ein Einlassöffnung auf, durch die die Flüssigkeit in die Vorrichtung eintritt. Eine zweite Kammer weist eine Auslassöffnung auf, durch die die Flüssigkeit wieder heraustritt. Zwischen der ersten Kammer und der zweiten Kammer befindet sich das Filterelement zum Filtern der Flüssigkeit. Dadurch, dass dem Filterelement direkt eine Einrichtung zum Abreinigen zugeordnet ist, also direkt in das Filterelement integriert ist, muss der Filter für die Wartungs- bzw. Reinigungszwecke nicht aus der Vorrichtung entfernt werden. Vielmehr kann das Filterelement im eingebauten Zustand durch die Einrichtung abgereinigt werden, sodass der Filterprozess nichtmal kurzzeitig, insbesondere gar nicht unterbrochen werden muss. Die Einrichtung kann dabei integraler Bestandteil des Filterelements sein, oder ein nicht integrales Element. Es ist außerdem denkbar, dass das Filterelement mit einer derartigen Einrichtung nachgerüstet werden kann.

Die Erfindung sieht es insbesondere vor, dass es sich bei dem Filterelement um ein Sieb, insbesondere um eine perforierte zylindrische Wandung einer Kammer handelt. Die Vorrichtung zum Filtern der Flüssigkeit ist mindesten aus zwei Kammern aufgebaut, wobei eine erste Kammer eine Einlassöffnung aufweist und die zweite Kammer eine Auslassöffnung. Das Filterelement kann sowohl Bestandteil der ersten als auch der zweiten, oder einer weiteren Kammer sein. Das Filterelement kann den Kammern auch gemeinsam zugeordnet sein.

Beide Kammern sind von einer länglichen Form, insbesondere zylindrisch, wobei die erste Kammer einen kleineren Radius aufweist, als die zweite Kammer. Die Wandung der ersten Kammer und somit die Trennwand zur zweiten Kammer ist zumindest teilweise perforiert. Diese Perforation der Wandung der ersten Kammer stellt das Filterelement, insbesondere das Sieb dar. Die perforierte Wandung kann jedoch auch der zweiten, oder einer weiteren Kammer, oder allen Kammern gemeinsam zugeordnet sein. Es ist jedoch auch denkbar, dass das Filterelement zwischen den beiden Kammern anders beschaffen ist, insbesondere aus Lamellen, Streifen Längsprofilen verschiedenster, beispielweise trapezartigen, Formen oder ähnlichem.

Es ist außerdem erfindungsgemäß vorgesehen, dass die Einrichtung zum Abreinigen des Filterelements, insbesondere des Siebs eine Scheibe ist. Der Durchmesser der Scheibe ist kleiner als der Innendurchmesser der perforierten Wandung der Kammer; alternativ ist es aber auch vorgesehen, dass der Durchmesser der Scheibe nahezu mit dem Innendurchmesser der perforierten Wandung der Kammer korrespondiert. Die Erfindung ist jedoch nicht auf diese spezielle Form der Scheibe festgelegt, sondern kann beispielsweise auch rechteckig oder vieleckig ausgestaltet sein. Die Scheibe ist insbesondere so orientiert, dass sie in ihrer Ebene senkrecht zu der Wandung steht, mit der sie abschließt. Sie kann jedoch jede andere denkbare Stellung relativ zu der Wandung einnehmen.

Die Scheibe ist geschlossen und weist keinerlei Durchlässe auf, durch die die Flüssigkeit treten kann. Es ist jedoch auch denkbar, dass die Scheibe Durchlässe aufweist. Mit derartigen Durchlässen lassen sich die Strömungseigenschaften der Scheibe in dem Filterelement variieren. Diese Geometrie bewirkt, dass die Flüssigkeit zwischen der Scheibe und der Kammer beschleunigt wird. Dadurch fällt der statische Druck in diesem Bereich ab, da auf der Außenseite der Kammer die Flüssigkeit langsamer fließt als im Spalt zwischen der Scheibe und der Kammer. Im Spalt zwischen der Scheibe und der Kammer herrscht somit ein höherer Druck. Durch die Erhöhung der Strömungsgeschwindigkeit wird ein mechanischer Abreinigungseffekt generiert. Dies bewirkt eine Abreinigung der Filter bzw. der Kammer. Durch ein gleichzeitiges Öffnen eines Auslassventils der Kammer welches mit einem System geringeren Druckes verbunden ist (z.B. Atmosphäre) werden Verunreinigungen durch die Sogwirkung aus der Kammer herausbefördert. Somit können Verunreinigungen aus der Vorrichtung ausgeschleust werden ohne, dass der Filtervorgang unterbrochen wird.

Es ist weiter vorgesehen, dass die Scheibe entlang einer Spindel parallel zu einer Längsachse des Filterelements bewegbar ist, insbesondere manuell oder durch einen Motor bewegbar ist. Die Spindel weist dabei ein Gewinde auf und erstreckt sich mindestens über die erforderliche abzureinigende Länge des perforierten Abschnitts der zylindrischen Wandung. Es ist außerdem vorgesehen, dass sich die Spindel mit dem Gewinde über die gesamte Länge der Vorrichtung von einer Stirnseite bis zu einer Einlassöffnung erstreckt. Die Länge dieses Bereichs kann abhängig von der Betriebsart und der Auslegung des Vorrichtung variieren. Das Gewinde der Spindel ist so beschaffen, dass es mit einem Innengewinde einer zentralen Öffnung in die Scheibe korrespondiert. Über die Steigung des Gewindes lässt sich die Bewegungsgeschwindigkeit der Scheibe einstellen. Die Spindel ist derart gelagert, dass sie drehbar antreibbar, bzw. manuell drehbar ist. Die Spindel erstreckt sich aus der Vorrichtung heraus, und ist dort beispielsweise mit einem Motor verbunden. Der Motor kann elektrischer, pneumatischer, hydraulischer oder ähnlicher Art sein. Die Spindel lässt sich jedoch auch manuell betätigen. Dadurch, dass das Gewinde der Spindel mit dem Innengewinde der Scheibe korrespondiert, lässt sich über eine Drehbewegung der Spindel direkt die Scheibe bewegen. Je nach Drehrichtung der Spindel ist die Scheibe von verschiedenen Richtungen aus durch das Filterelement bzw. über die perforierte Wandung bzw. von der Stirnseite bis zu der Einlassöffnung bewegbar, um den beschriebenen Abreinigungseffekt zu bewirken.

Es ist weiter vorgesehen, dass die Spindel axial in einer Führung in dem Filterelement und/oder an einer Stirnseite der Vorrichtung befestigt ist. Die Führung, an der die Spindel befestigt ist, befindet sich abgesetzt von der Einlassöffnung vor dem perforierten Bereich innerhalb der zylindrischen Wandung der ersten Kammer in der zweiten Kammer bzw. direkt an der Einlassöffnung. Die Führung weist einen äußeren Ring auf, der der Form der Innenseite der Wandung angepasst ist. Außerdem weist die Führung Speichen auf, die sich von einem mittigen, axialen Lager der Führung zum äußeren Ring erstrecken. Die Anzahl und die Form der Speichen ist so zu wählen, dass die Transmission der hindurch strömenden Flüssigkeit nicht beeinflusst wird. Die Führung kann jedoch auch jede andere Form aufweisen. So ist es auch denkbar, dass die Speichen direkt an der Wandung befestigt sind. Die Führung kann auch direkt im Bereich der Einlassöffnung der Vorrichtung bzw. der ersten Kammer befestigt sein. Das entsprechende andere Ende der Spindel tritt an einer Stirnseite der Vorrichtung bzw. der zweiten Kammer durch eine Außenwandung aus der Kammer nach außen und zwar derart, dass keine Flüssigkeit aus der Kammer austreten kann. Die Spindel ist in der Außenwandung derart befestigt, dass sie frei drehbar ist, aber nicht in axiale Richtung verrutscht. Außerhalb der zweiten Kammer ist das Spindelende über eine Kopplung an einem Motor gekoppelt. Es ist aber auch denkbar, dass an der Kopplung eine Kurbel zum manuellen Bewegen der Spindel befestigt ist.

Außerdem sieht es die Erfindung vor, dass die Scheibe an mindestens einem Führungselement, insbesondere einer Führungsstange oder Führungsnute, entlang der Spindel bewegbar ist, insbesondere ohne sich um ihre eigene Achse zu drehen. Die mindestens eine Führungsstange ist parallel zu der Spindel versetzt und ebenfalls an der Führung und der Stirnseite der Vorrichtung befestigt. Außerdem weist die Scheibe eine entsprechende Zahl von Öffnungen auf, durch die jeweils eine der Führungsstangen reibungslos läuft. Die Öffnungen in der Scheibe sind so dimensioniert, dass die Führungsstangen reibungslos durch sie hindurchtreten. Andererseits soll durch die Öffnungen der Scheibe keine Flüssigkeit treten, da dies zu einem Druckverlust führen würde. Alternativ oder zusätzlich zu den Führungsstangen kann die Scheibe oder die Wandung eine Führungsnute aufweisen, die mit einem entsprechenden Gegenstück in der Wandung bzw. in der Scheibe korrespondiert.

Die Führungsstange bzw. die Führungsnute verhindert, dass sich die Scheibe beim Drehen der Spindel um die Spindel bewegt; vielmehr wandert die Scheibe axial entlang der Spindel und somit entlang dem Filterelement. Auf diese Art lässt sich die Scheibe entlang der Längsachse des Filterelements verfahren und so sämtliche Schwebestoffe oder Kleinstlebewesen von der Innenwandung der ersten Kammer abstreifen bzw. abreinigen. Das Abreinigen der Schwebestoffe oder Kleinstlebewesen erfolgt durch einen partiellen Strömungsumkehr-Effekt im Bewegungsbereich der Scheibe, der eine Umkehr der Strömung von der zweiten Kammer in die erste Kammer in dem Spaltbereich bewirkt. Außerdem erfolgt gleichzeitig ein mechanischer Abreinigungseffekt durch die stark erhöhte Strömungsgeschwindigkeit in dem Spalt zwischen Scheibe und Filterelement. Durch das gleichzeitige Öffnen eines Ventils der Vorrichtung zu einem Bereich niedrigeren Drucks bzw. Atmosphärendruck werden die Schwebstoffe durch den Druckgradient aus der Vorrichtung ausgeschleust.

Weiter ist es vorgesehen, dass die Vorrichtung eine Öffnung, insbesondere einen Stutzen aufweist, der durch ein Ventil verschließbar ist. Der Druck der Flüssigkeit innerhalb der Vorrichtung bzw. innerhalb der mindestens zwei Kammern übersteigt den Atmosphärendruck. Es herrscht somit Überdruck in der Vorrichtung. Beim Öffnen des Ventils des Stutzens strömt das Wasser aufgrund des Überdrucks aus der Vorrichtung bzw. aus der Kammer heraus. Durch das Herausströmen der Flüssigkeit werden einige Schwebestoffe und/oder Kleinstlebewesen bereits mitgerissen. Bei dem Ventil kann es sich um ein elektrisches, pneumatisches, hydraulisches oder manuell betreibbares Ventil handeln.

Ein Verfahren zur Lösung der eingangs genannten Aufgabe weist die Merkmale des Anspruchs 8 auf. Demnach ist es vorgesehen, dass zum Abreinigen eines Filterelements zwei Schritte durchgeführt werden. Bei der vorliegenden Vorrichtung, auf die sich das Verfahren bezieht, tritt eine Flüssigkeit durch eine Einlassöffnung einer ersten Kammer durch das Filterelement und dann durch eine Auslauföffnung einer zweiten Kammer wieder aus. Das Abreinigen kann alternativ auch nur in einem Schritt oder auch in mehr als zwei Schritten ausgeführt werden. Das Verfahren besteht im Wesentlichen aus einem mechanischen durch Strömung bedingtem Abreinigen, sowie durch den Effekt der partiellen Strömungsumkehr in dem Spalt zwischen Scheibe und Filterelement. Die partiellen Strömungsumkehr wird durch die Beschleunigung der Flüssigkeit im Spalt zwischen Scheibe und Filterelement relativ zu der langsamer fließenden Flüssigkeit in der zweiten Kammer verursacht wird. Dieser physikalische Effekt des abfallenden statischen Drucks in einem Bereich schneller fliesenden Flüssigkeit relativ zu einem Bereich langsamer fließenden Flüssigkeit, dient gemeinsam mit der Öffnung der Ventil der ersten Kammer der Abreinigung des Filterelements. Der eigentliche Filtrationsprozess der Flüssigkeit wird dabei nicht unterbrochen.

Es ist erfindungsgemäß vorgesehen, dass für den ersten Schritt des Spülens des Filterelements, insbesondere eines Siebs, ein Ventil einer Öffnung, insbesondere eines Stutzens, an einer Kammer geöffnet wird. Dadurch, dass in der Vorrichtung bedingt durch einen hohen Flüssigkeitsdruck ein Überdruck herrscht, strömt die Flüssigkeit durch die Öffnung heraus. Bei diesem Herausströmen werden Schwebeteilchen und gegebenenfalls Kleinstlebewesen mitgerissen und so aus dem Filterelement bzw. der Kammer abtransportiert. Da die Öffnung jedoch nicht groß genug ist, um die gesamte Durchflussmenge des Apparates auszuschleusen, findet parallel der eigentliche Prozess der Filtration statt.

Weiter ist es vorgesehen, dass in einem zweiten Schritt eine Scheibe parallel zu einer Achse des Filterelements bewegt wird. Dieser zweite Schritt, der dem ersten folgt, aber auch unabhängig von dem ersten Schritt oder auch ohne den ersten Schritt durchgeführt werden kann, bewirkt zunächst, dass Schwebestoffe oder Kleinstlebewesen, die sich an der Innenseite einer Wandung der Kammer festgesetzt haben, mechanisch bzw. Strömungsmechanisch durch die beschriebenen Abreinigungseffekte, verursacht durch die Scheibe, gelöst und derart weggeschoben bzw. ausgeschleust werden, dass die Perforationen freigegeben werden.

Zusätzlich zu der mechanischen Abscheidung der Schwebestoffe bildet sich durch die verschiedenen Fließgeschwindigkeiten an den Perforationen und im Inneren des Filterelements ein Druckunterschied, sodass verbleibende Schwebestoffe von den Ränden der Perforation weggerissen werden können. Die Scheibe lässt sich entlang einer Spindel parallel zu der Achse des Filterelements in zwei entgegengesetzte Richtungen hin und her motorisch oder manuell verschieben. Es ist auch denkbar, dass die Scheibe während des Filterbetriebs und geschlossenem Ventil entlang der Spindel hin- und hergefahren wird, sodass permanent eine Abreinigung des Filterelements erfolgt. Das Ausschleusen der Stoffe kann somit auch diskontinuierlich vom Abreinigungsprozess erfolgen.

Ein bevorzugtes Ausführungsbeispiel der Erfindung wird anhand der Zeichnung näher erläutert. In dieser zeigen:
- Fig. 1: eine erfindungsgemäße Vorrichtung zum Filtern einer Flüssigkeit,
- Fig. 2: einen Längsschnitt der erfindungsgemäßen Vorrichtung, und
- Fig. 3: einen perspektivischen Schnitt durch die erfindungsgemäße Vorrichtung.

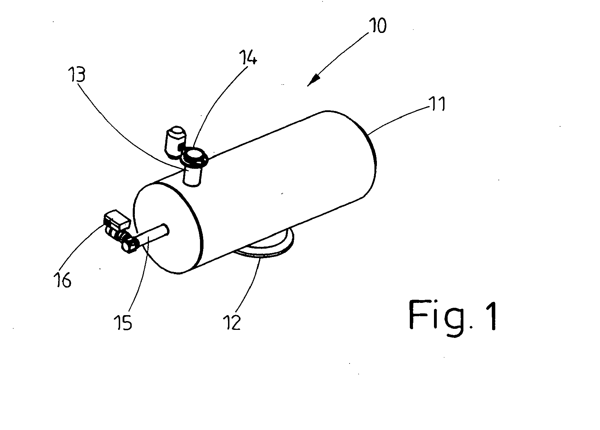

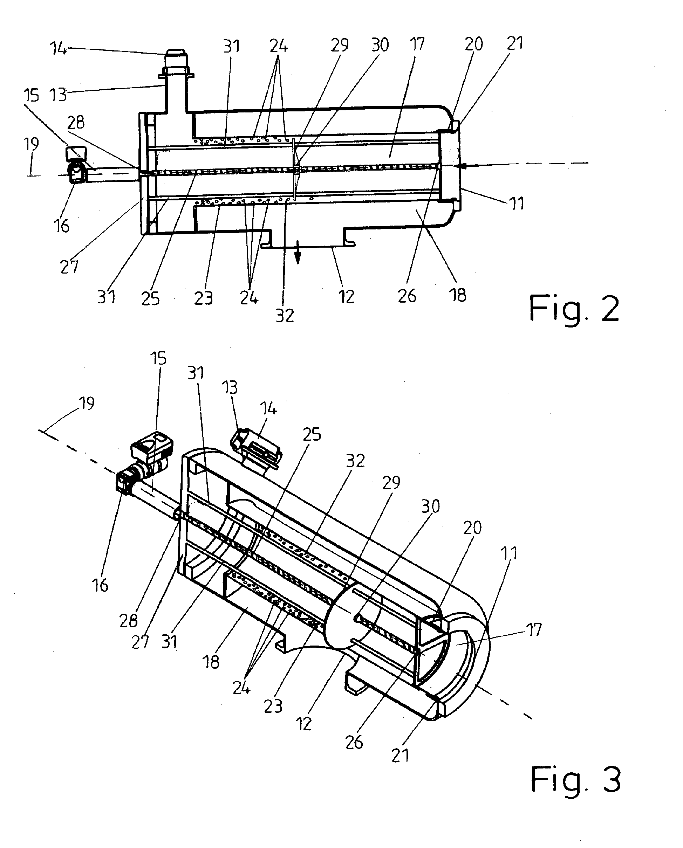

Die Fig. 1 zeigt eine erfindungsgemäße Vorrichtung 10 mit einer Einlassöffnung 11, einer Auslassöffnung 12, einem Stutzen 13 mit Ventil 14 sowie einem Schaft 15 mit einem Motor 16. Bei der vorliegenden Vorrichtung 10 handelt es sich um eine Vorrichtung zum Filtern einer Flüssigkeit. Dazu tritt eine Flüssigkeit, insbesondere Wasser, durch die Einlassöffnung 11 in eine erste Kammer 17, die zylindrisch ausgebildet ist und sich in einer zweiten Kammer 18 derart erstreckt, dass beide Längsachsen 19 zusammen fallen (Fig. 2). Dann wird die Flüssigkeit durch ein Filterelement 32 gefiltert und tritt durch die Auslassöffnung 12 der zweiten Kammer 18, die ebenfalls zylindrisch ausgebildet ist, wieder aus der Vorrichtung 10 nach außen.

Die erste Kammer 17 ist von der zweiten Kammer 18 durch einen Ring 20 und ein Dichtelement getrennt. Die Wandung 23 der ersten Kammer 17 stellt gleichzeitig die Trennwand zur zweiten Kammer 18 dar (Fig. 2, Fig. 3). Die Wandung 23 der ersten Kammer 17 ist zumindest teilweise derart ausgebildet, dass sie als Filterelement 32 dient. Dieses Filterelement 32 oder Sieb kann je nach zu erwartender Schwebestoffe und Verunreinigung Löcher bzw. Öffnungen verschiedener Größe aufweisen. Durch die Öffnungen des Filterelements 32 tritt die Flüssigkeit von der ersten Kammer 17 in die zweite Kammer 18 und nachfolgend durch die Auslassöffnung 12 aus der Vorrichtung 10. Somit werden Schwebstoffe, deren Ausmaße größer als die Öffnungen des Filterelements 32 sind, durch das Filterelement 32 herausgefiltert und verbleiben in der ersten Kammer 17 bzw. an der Wandung 23 der ersten Kammer 17 als abzufilternde Stoffe 24.

Innerhalb der ersten Kammer 17 auf der Längsachse 19 der beiden Kammern 17 und 18 sieht die Erfindung eine Spindel 25 vor. Diese Spindel 25 weist ein Gewinde auf. Die Spindel 25 erstreckt sich zumindest über den Bereich der Wandung 23 der ersten Kammer 17, der das Sieb aufweist. Die Spindel 25 kann sich allerdings auch über die gesamte Länge der ersten Kammer 17 erstrecken (Fig. 2, Fig. 3).

Die Spindel 25 ist mit ihren kammerseitigen Enden an einer Führung 26 im Inneren der ersten Kammer 17 derart befestigt, dass sie sich noch um ihre eigene Achse drehen kann. Die Führung 26 ist ringartig ausgebildet, wobei der äußere Durchmesser des Rings mit der Form der Wandung 23 der ersten Kammer 17 korrespondiert und fest an diesem anliegt. Die Führung 26 weist außerdem Speichen auf, welche die Aufnahme der Spindel 25 mit dem äußeren Ring verbindet. Die Anzahl und die Form der Speichen ist derart bemessen, dass die Transmission des Wassers durch die Führung 26 nur geringfügig beeinflusst wird. Auf der entgegengesetzten Seite, tritt die Spindel 25 durch die Stirnseite 27 der ersten Kammer 17 aus der Vorrichtung 10 heraus. Damit keine Flüssigkeit aus der ersten Kammer 17 heraustritt, ist der Durchtritt durch die Stirnseite 27 mit einem Dichtungspaket 28 abgedichtet.

Außerhalb der Vorrichtung 10 weist die Spindel 25 einen Schaft 15 auf, der mit einem Motor 16 verbunden ist. Der Schaft 15 könnte aber genau so gut über ein manuelles Betätigungselement verfügen.

Auf der Spindel 25 befindet sich im Inneren der ersten Kammer 17 eine Scheibe 29. Diese Scheibe korrespondiert ebenfalls mit ihrem Außendurchmesser mit der Wandung 23 der ersten Kammer 17. Die Scheibe 29 weist einen Einsatz 30 auf, der ein der Spindel 25 entsprechendes Innengewinde aufweist.

Versetzt zu der Spindel 25 bzw. zu der Längsachse 19 der ersten Kammer 17 weist das Ausführungsbeispiel zwei Führungsstangen 31 auf. Diese Führungsstangen 31 sind fest mit der Führung 26 und der Stirnseite 27 der ersten Kammer 17 verbunden. Außerdem treten die beiden Führungsstangen 31 reibungslos durch zwei Löcher in der Scheibe (Fig. 3).

Wird die Spindel 25 manuell oder motorisch zum Drehen gebracht, bewegt sich die Scheibe 29 entlang der Längsachse 19 von der Stirnseite 27 zur Führung 26 oder in entgegengesetzter Richtung. Die Führungsstangen 31 bewirken, dass sich die Scheibe 29 nicht mit der Spindel 25 dreht. Die Erfindung ist natürlich nicht auf das dargestellte Ausführungsbeispiel beschränkt, sondern kann vielmehr auch nur eine Führungsstange 31 oder eine Vielzahl von Führungsstangen 31 aufweisen. Außerdem ist es denkbar, dass die Scheibe 29 oder die Wandung 23 der ersten Kammer 17 nicht dargestellte Führungsnuten aufweisen entlang derer sich die Scheibe rotationsfrei auf der Spindel 25 bewegen kann.

Außerdem weist die erste Kammer 17 einen Stutzen 13 mit einem Ventil 14 auf, welches händisch oder motorisch geöffnet werden kann. Dadurch, dass sich die Flüssigkeit in der Vorrichtung 10 unter Überdruck befindet, tritt beim Öffnen des Ventils 14 die Flüssigkeit aus der Vorrichtung 10 heraus. Durch dieses schlagartige Heraustreten der Flüssigkeit wird bereits in einem ersten Schritt ein Großteil der abzufilternden Stoffe 24 aus der ersten Kammer 17 herausbefördert (erster Schritt der Abreinigung).

Verbleibende Stoffe 24, insbesondere Stoffe 24, die an der Wandung 23 haften, können durch die sich entlang der Spindel 25 bewegende Scheibe 29 in einem zweiten Abreinigungsschritt strömungsmechanisch abgereinigt werden. Zusätzlich zu dem mechanischen Abstreifen entstehen durch die verschiedenen Fließgeschwindigkeiten im Filterelement 32 und durch den Stutzen 13 Druckgefälle, die dazu führen, dass noch vorhandene Stoffe 24 von der Wandung 23 losgerissen werden.

### Bezugszeichenliste:

- 10: Vorrichtung
- 11: Einlassöffnung
- 12: Auslassöffnung
- 13: Stutzen
- 14: Ventil
- 15: Schaft
- 16: Motor
- 17: erste Kammer
- 18: zweite Kammer
- 19: Längsachse
- 20: Ring
- 21: Dichtelement
- 22: Dichtelement
- 23: Wandung
- 24: abzufilternde Stoffe
- 25: Spindel
- 26: Führung
- 27: Stirnseite
- 28: Dichtungspaket
- 29: Scheibe
- 30: Einsatz
- 31: Führungsstange
- 32: Filterelement

## Patentansprüche

1. Vorrichtung (10) zum Filtern einer Flüssigkeit, mit mindestens zwei Kammern, wobei eine erste Kammer (17) mindestens eine Einlassöffnung (11) und eine zweite Kammer (18) mindestens eine Auslassöffnung (12) aufweist und die mindestens zwei Kammern durch ein Filterelement (32) voneinander getrennt sind und die von der Einlassöffnung (11) der ersten Kammer (17) zu der Auslassöffnung (12) der zweiten Kammer (18) strömenden Flüssigkeit durch das Filterelement (32) tritt, **dadurch gekennzeichnet, dass** das Filterelement (32) eine Einrichtung zum Abreinigen aufweist.

2. Vorrichtung (10) nach Anspruch 1, **dadurch gekennzeichnet, dass** das Filterelement (32) ein Sieb, insbesondere eine perforierte, zylindrische Wandung (23) der ersten Kammer (17) ist.

3. Vorrichtung (10) nach Anspruch 1 oder 2, **dadurch gekennzeichnet, dass** die Einrichtung zum Abreinigung eine Scheibe (29) ist, insbesondere eine Scheibe (29), deren Durchmesser kleiner ist als ein Innendurchmesser der ersten Kammer (17).

4. Vorrichtung (10) nach einem der vorhergehenden Ansprüche, **dadurch gekennzeichnet, dass** die Scheibe (29) entlang einer Spindel (25) parallel zu einer Längsachse (19) des Filterelements (32) bewegbar ist, insbesondere manuell oder durch einen Motor (16) bewegbar ist.

5. Vorrichtung (10) nach einem der vorhergehenden Ansprüche, **dadurch gekennzeichnet, dass** die Spindel (25) axial in einer Führung (26) in dem Filterelement (32) und/oder an einer Stirnseite (27) der Vorrichtung (10) befestigt ist.

6. Vorrichtung (10) nach einem der vorhergehenden Ansprüche, **dadurch gekennzeichnet, dass** die Scheibe (29) an mindestens einem Führungselement (31), insbesondere eine Führungsstange (31) oder Führungsnute, entlang der Spindel (25) bewegbar ist, insbesondere ohne sich um die eigene Achse (19) zu drehen.

7. Vorrichtung (10) nach einem der vorhergehenden Ansprüche, **dadurch gekennzeichnet, dass** die Vorrichtung (10) eine Öffnung, insbesondere einen Stutzen (13), aufweist, die durch ein Ventil (14) verschließbar ist.

8. Verfahren zum Filtern einer Flüssigkeit mittels einer Vorrichtung (10) mit mindestens zwei Kammern, wobei eine erste Kammer (17) mindestens eine Einlassöffnung (11) und eine zweite Kammer (18) mindestens eine Auslassöffnung (12) aufweist und eine von der Einlassöffnung (11) der ersten Kammer (17) zu der Auslassöffnung (12) der zweiten Kammer strömende Flüssigkeiten durch ein Filterelement (32) gefiltert wird, **dadurch gekennzeichnet, dass** das Filterelements (32) in zwei Schritten abgereinigt wird.

9. Verfahren nach Anspruch 8, **dadurch gekennzeichnet, dass** für den ersten Schritt des Abreinigens des Filterelements (32), insbesondere eines Siebs, ein Ventil (14) einer Öffnung, insbesondere ein Stutzen (13), an einer Kammer geöffnet wird.

10. Verfahren nach Anspruch 8 oder 9, **dadurch gekennzeichnet, dass** in einem zweiten Schritt des Abreinigens des Filterelements (32), insbesondere eines Siebs, eine Scheibe (29) parallel zu einer Achse (19) des Filterelements (23) bewegt wird.
